# EUROPEAN PATENT APPLICATION

(11) **EP 0 739 813 A1**
(43) Date of publication of application: **30.10.1996**
(21) Application number: 96302855.0
(22) Date of filing: 24.04.1996
(51) Int. Cl.: B63G 11/00, B64F 1/22

(54) **Aircraft handling and/or storage apparatus**

(30) Priority: 29.04.1995 GB 9508767
(71) Applicant: BRITISH AEROSPACE PUBLIC LIMITED COMPANY, Farnborough, Hants. GU14 6YU (GB)
(72) Inventor: Drinkwater, Paul Jefferson, British Aero. Def. Ltd, Preston, Lancashire, PR4 1AX (GB); Whaites, Colin, British Aerospace Defence Limited, Preston, Lancashire, PR4 1AX (GB)
(74) Representative: Eastmond, John

(57) **Abstract**

Aircraft lift apparatus (12) for an aircraft-carrying vessel, for transferring an aircraft between the flight deck and a storage area below said flight deck, said apparatus including means for tilting the aircraft (14) about an axis (16) thereby to reduce the effective width of the aircraft (22), and lift means (10) for moving the aircraft between said flight deck and said storage area.

## Description

This invention relates to aircraft handling and/or storage apparatus and in particular, but not exclusively, to aircraft lift apparatus for transferring an aircraft between the aircraft deck and the hold of an aircraft carrier.

In many existing aircraft carriers, there is a limit to the size of an aircraft that can be stored in the hold, imposed by the length and the width of the ship's aircraft deck-to-hold lifts. Previously the constraints on size have meant that aircraft have been designed with folding wings but this is far from ideal because major structural modification is required with increased weight and complexity. A folded wing solution may also give rise to operational difficulties, as the wings need to be unfolded, secured, and various checks carried out prior to flight and this may prolong the time taken to deploy the aircraft.

Accordingly, a need exists for a system which allows aircraft to be transferred between decks on a ship in a lift of a set size, without requiring the wings of the aircraft to be folded.

In one aspect, this invention provides aircraft lift apparatus for an aircraft-carrying vessel, for transferring an aircraft between the flight deck and a storage area below said flight deck, said apparatus including means for tilting the aircraft about an axis thereby to reduce the effective width of the aircraft, and lift means for moving the aircraft between said flight deck and said storage area.

In the above system, by tilting the aircraft, it is possible to fit it into a lift of width less than the wingspan, provided of course that there is sufficient height.

Although the illustrated embodiment shows tilting about the roll axis to reduce effective width, if the overall length of the aircraft is likely to cause a problem, the effective length may be reduced by rotating about the pitch axis, instead or in addition.

The number of aircraft that can be stored in the hold of an aircraft carrier is limited by the physical size of the aircraft. Normally, the aircraft are stored in a level attitude and this means that the number of aircraft that can be stored is determined by the overall width and length of the aircraft. We have found that by extending the above techniques to storage of the aircraft, we may obtain a much higher packing density. Thus the aircraft may be tilted about the roll and/or pitch axes to reduce their effective length and/or width, to arrive at the best aircraft fit for the hanger deck.

Thus, in another aspect, this invention provides an aircraft storage system for a plurality of aircraft in which at least some of the aircraft are tilted about their roll and/or pitch axes whereby the packing density of the aircraft may be increased.

For example, the aircraft may be tilted about their roll axes so that they may be nested together with the wing of one aircraft overlying the wing of a neighbouring aircraft, without contacting it.

In yet a further aspect, this invention provides aircraft handling and/or storage apparatus, comprising a platform, means for securing or locating an aircraft onto said platform in use, and means for tilting said platform to cause said aircraft to be tilted about an axis.

Whilst the invention has been defined above, it extends to any inventive combination of the features set out above or in the following description.

The invention may be performed in various ways, and, by way of example only, an embodiment thereof will now be described in detail, reference being made to the accompanying drawings, in which:-
Figure 1 is a schematic front view of an embodiment of aircraft lift apparatus in accordance with the invention, showing an aircraft in a level attitude, and
Figure 2 is a schematic front view of the embodiment of Figure 1, but with the aircraft tilted, and
Figure 3 is a front view of an aircraft storage system in accordance with the invention.

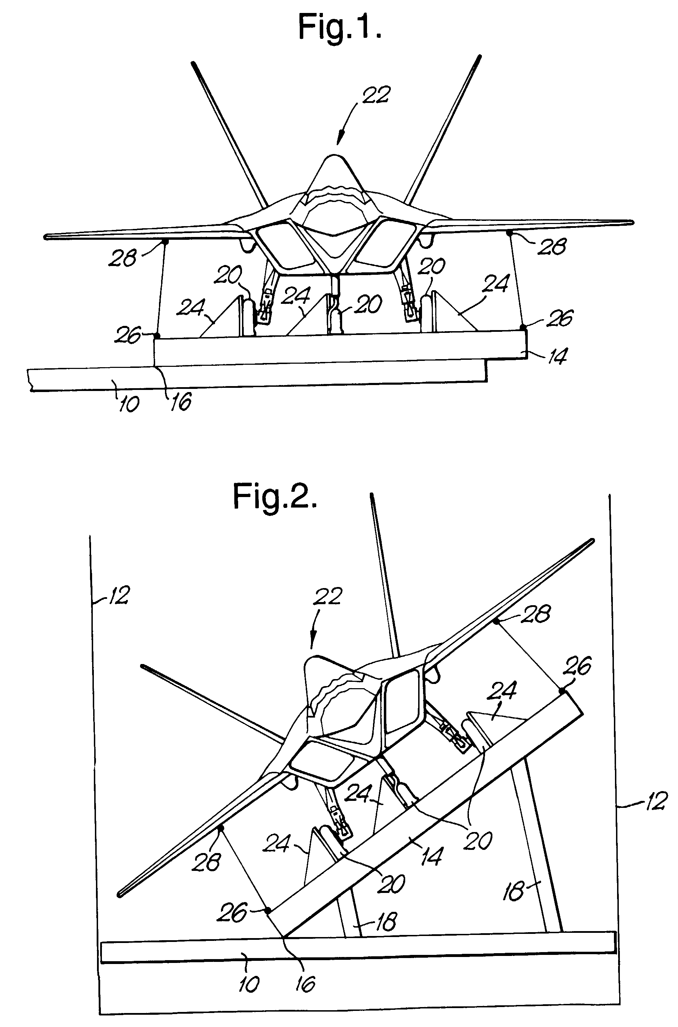

Referring to Figures 1 and 2, the lift apparatus comprises a ship's lift platform 10, vertically moveable between the aircraft deck and the hold, down a shaft whose width is shown by lines 12. A hydraulic platform 14 is pivotally mounted on the ship's platform 10 for pivotal movement about an axis 16, from the level position shown in Figure 1 to a tilted position of 35° or more, driven by hydraulic rams 18 (see Figure 2). The hydraulic platform 14 is marked up with tyre footprint positions (not shown) for the tyres 20 of the aircraft 22 to be stowed. A hydraulic angle plate 24 is associated with each wheel for preventing it from slipping sideways when the aircraft is tilted. For greater security, two releasable wheel clamps (not shown) of horse shoe or inverted U-shape may be associated with each angle plate 24, one in front of the wheel and one behind, to stop fore and aft movement of the clamped wheel.

The aircraft may be lashed to the hydraulic platform by hard points 26 on the hydraulic platform and lashing points 28 on the aircraft 22.

In use, an aircraft 22 to be transported from the hold to the flight deck is moved onto the hydraulic platform with its tyres 22 on the marked footprint positions, and lashed to the platform. The angle plates 24 are then deployed to locate or lock the aircraft wheels in position.

The hydraulic rams 18 are activated to tilt the aircraft 22 from the position of Figure 1 to that of Figure 2. In doing so, the effective width reduces sufficiently (without structural modification to the wings) to fit comfortably within the confines of the lift shaft. The aircraft is then raised to the aircraft deck and the sequence of tilting, lashing etc. reversed, so that the aircraft is available for rapid deployment.

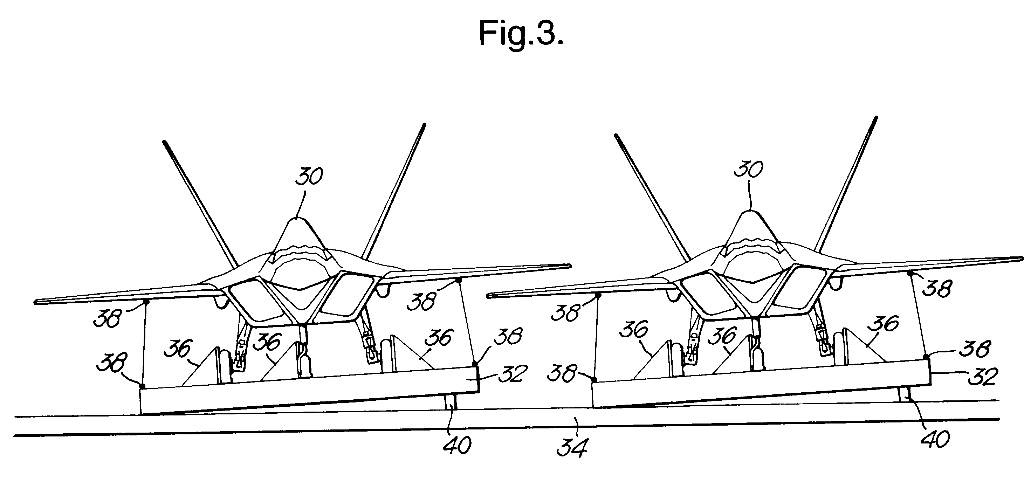

Referring now to Figure 3, the aircraft storage system is intended for use on an aircraft hanger deck to increase the packing density of the aircraft and thus the number of aircraft that may be carried. The system may however be used for many other instances where space is limited or at a premium. In Figure 3, only two aircraft are shown, just to illustrate the principle, although in practice many more aircraft may be involved. Each aircraft 30 is located on a hydraulic platform 32 of similar design to those shown in Figures 1 and 2, but with less travel and so these will not be described in detail again.

The hydraulic platforms 32 are each secured to the hanger deck 34. In use, the aircraft are loaded in the correct sequence onto the hydraulic platforms, i.e. left to right for the configuration and tilt sense of Figure 3. Each aircraft 30 is positioned onto pre-marked footprints (not shown) on the hydraulic platform 32, angle plates 36 are positioned against each wheel and then hydraulic horse shoe or inverted U-shaped clamps (not shown) operated to secure the wheel in the fore and aft position. The aircraft is lashed to the platform 32 using lashing points 38. With the left hand aircraft lashed securely to the platforms 32, it is raised to a preset angle using a ram 40 to raise the port wing, such that when the right hand aircraft is moved onto the platform 32 the starboard wing does not crash into the port wing of the tilted aircraft. The right hand aircraft is then secured and lashed as before and tilted to allow the next aircraft (not shown) to be brought into line. In this way an increased packing density is obtained. In some instances the aircraft may be tilted about their pitch axes instead of or as well as about their roll axes as shown.

## Claims

1. Aircraft lift apparatus for an aircraft-carrying vessel, for transferring an aircraft between the flight deck and a storage area below said flight deck, said apparatus including means for tilting the aircraft about an axis thereby to reduce the effective width of the aircraft, and lift means for moving the aircraft between said flight deck and said storage area.

2. An aircraft lift apparatus according to Claim 1, wherein said means for tilting comprises a platform member pivotally mounted with respect to said lift means.

3. An aircraft lift apparatus according to Claim 2, including hydraulic drive means for tilting said platform member.

4. An aircraft lift apparatus according to Claim 2 or 3, including means for locating the aircraft wheels on said platform member.

5. An aircraft lift apparatus according to Claim 4, wherein said locating means are retractable.

6. An aircraft lift apparatus according to any of Claims 2 to 5, wherein said platform member includes mark means or other indicia means indicating the preferred position for the aircraft wheels.

7. An aircraft lift apparatus according to any of Claims 2 to 6, wherein said platform member includes one or more attachment points for carrying means to lash an aircraft down in use.

8. An aircraft storage system for a plurality of aircraft, in which at least some of the aircraft are tilted about their roll and/or pitch axes, whereby the packing density of the aircraft may be increased.

9. Aircraft handling and/or storage apparatus, comprising a platform, means for securing or locating an aircraft onto said platform in use, and means for tilting said platform to cause said aircraft to be tilted about an axis.
